Europäisches Patentamt

European Patent Office

Office européen des brevets

(19)

(11) Veröffentlichungsnummer : **0 109 578
B1**

(12)

# EUROPÄISCHE PATENTSCHRIFT

(45) Veröffentlichungstag der Patentschrift :
21.01.87

(51) Int. Cl.⁴ : **A 61 C 9/00**

(21) Anmeldenummer : 83110626.5

(22) Anmeldetag : 25.10.83

(54) **Abdrucklöffel zur Erstabformung von unbezahnten Kiefern unter Verwendung plastischer, aushärtender Abdruckmassen.**

(30) Priorität : 26.10.82 DE 3239529

(43) Veröffentlichungstag der Anmeldung :
30.05.84 Patentblatt 84/22

(45) Bekanntmachung des Hinweises auf die Patenterteilung : 21.01.87 Patentblatt 87/04

(84) Benannte Vertragsstaaten :
FR GB IT

(56) Entgegenhaltungen :
DE-A- 2 617 160
DE-B- 1 297 811
DE-U- 7 017 283
US-A- 2 618 853
US-A- 2 700 217
US-A- 2 845 708
US-A- 3 066 414

(73) Patentinhaber : **Braun, Siegfried
Keesburgstrasse 24a
D-8700 Würzburg (DE)**

(72) Erfinder : **Braun, Siegfried
Keesburgstrasse 24a
D-8700 Würzburg (DE)**

(74) Vertreter : **Fuchs, Richard
Kantstrasse 18
D-8700 Würzburg (DE)**

## Beschreibung

Die Erfindung bezieht sich auf Abdrucklöffel zur Erstabformung von unbezahnten Kiefern unter Verwendung plastischer, aushärtender Abdruckmassen, wobei an dem Abdrucklöffel für den Unterkiefer eine Distanzierungseinrichtung und einer Abdruckmasse als Biß-Registrat vorgesehen ist.

Zur einzelnen Abformung von Ober- und Unterkiefer eines Patienten mittels plastischer aushärtender Abdruckmassen ist es bekannt, als Träger dieser Abdruck- bzw. Abformmassen sogenannte Abdrucklöffel aus Kunststoff oder Metall zu verwenden. Die Kunststoff-Abdrucklöffel z. B. des bekannten All-Oral-Bestecks nach M. Hofmann (Literaturquelle : M. Hofmann, Totale Prothesen nach dem All-Oral-Verfahren, Carl Hanser Verlag, München, Wien, 1975) bestehen aus relativ flachen, perforierten Trägern, die zwar eine präfunktionelle Abformung von Ober- und Unterkiefer ermöglichen, welche aber nicht auf das durch die spätere Prothese bedingte Maß begrenzt ist, da beim Abformvorgang das der Zahnreihe entsprechende Wider- oder Gegenlager für die Wangen-, Zungen- und Lippenmuskulatur fehlt. Zur Bißlagenfixierung nach erfolgter Abformung des Unterkiefers wird bei dem obigen Verfahren an dem Abdrucklöffel für den Unterkiefer eine Distanzierungseinrichtung in Form einer sogenannten Gaumenschablone benutzt, die mit Abdruckmasse beschickt wird, so daß bei der Bißnahme das Gaumenrelief in der Abdruckmasse abgezeichnet wird. Da die Abdruckmasse jedoch großflächig auf dieser Gaumenschablone aufgetragen ist, besteht die Gefahr, daß die Abformung insbesondere im Bereich der Gaumenfalte Reproduktions- und Fixiermängel aufweist. Da ferner die Verbindung zwischen dem Abdrucklöffel und der Gaumenschablone nur durch eine relativ schwache Steckverbindung an ihren Scheitelstellen erfolgt, besteht weiterhin die Gefahr, daß bei Belastung dieser Teile während des Abformvorgangs (Bißnahme) eine Relativbewegung (Klappbewegung) dieser Teile stattfindet, wodurch die Bißlagenfixierung verfälscht wird. Schließlich ermöglicht dieses bekannte Besteck nicht ohne weiteres eine nachträgliche Kontrolle der festgelegten Bißlage.

Es sind ferner Abdrucklöffel aus Kunststoff für die sogenannte geschlossene Mundabformung bekannt (vergl. Prospekt der IVOCLAR AG), die zwar für Ober- und Unterkiefer getrennt in die Mundhöhle eingesetzt, dann jedoch bei der Abdrucknahme durch die Abformmasse zur Bißnahme vereinigt werden. Zu diesem Zweck sind beide Abdrucklöffel mit Anlageflächen versehen, von denen diejenige am Abdrucklöffel für den Oberkiefer perforiert ist, um den Durchtritt der Abdruckmasse zu ermöglichen. Aufgrund der Form und Anordnung dieser Anlageflächen an beiden Abdrucklöffeln besteht jedoch die Gefahr einer erzwungenen Bißlagefixierung, denn die planen Anlageflächen ermöglichen bei der Abformung des Unterkiefers relativ zum Oberkiefer leicht eine nicht korrigierbare Verlagerung der Löffel. Außerdem ist die Zentralposition des Abdrücklöffels für den Unterkiefer nicht nachprüfbar und eine einmal festgelegte Bißlage kann nicht berichtigt werden. Bei erforderlicher Änderung z. B. exzentrischer Bißlagefixierung bedeutet dies Ausschuß. Der entscheidende Nachteil dieser bekannten Abdrucklöffel für die geschlossene Mundabformung besteht jedoch darin, daß beim Abformvorgang keine Muskelbewegung erfolgen darf und praktisch auch nicht möglich ist, so daß eine aktive präfunktionelle Abformung der später auf die Prothese einwirkenden Muskulatur fehlt, und zwar mit all den nachteiligen Folgen für einen einwandfreien Sitz der danach anzufertigenden individuellen Funktionsbißplatten (mangelhafte Saughaftung, Überextensionen usw.).

Durch die DE-U-7 017 283 ist es bekannt, an den Abdrucklöffeln für Ober- und Unterkiefer Wachswälle anzuordnen, um die Abdrucknahme und Bißlagenfixierung in einem Arbeitsgang durchführen zu können. Da hier aber im vertikalen Freiraum zwischen dem unbezahnten Oberkiefer und unbezahnten Unterkiefer die beiden Abdrucklöffel mit den Wachswällen und auch die zur Abformung der Kiefer erforderliche Abdruckmasse untergebracht werden müssen, ist diese Methode praktisch nicht anwendbar, denn sie führt zwangsläufig zu einer verfälschenden Bißerhöhung. Außerdem können bei gleichzeitiger Ober- und Unterkiefer-Abformung keine Muskelreflexe aufgezeichnet werden und die Wachswälle an den beiden Abdrucklöffeln sind aufgrund ihrer Konsistenz nicht geeignet, den Ober- und Unterkiefer-Abdruck lagesicher zu verschlüsseln. Letzteres ist jedoch für eine eindeutige und sichere Bißlagenfixierung unbedingt erforderlich.

Der Erfindung liegt die Aufgabe zugrunde, Abdrucklöffel als Träger für Abformmassen zur Erstabdrucknahme unbezahnter Kiefer zu schaffen, mittels derer eine einwandfreie präfunktionelle Abformung der Kiefer auf das durch die spätere Prothese bedingte Maß unter Berücksichtigung des Reflexmusters der Wangen-, Lippen- und Zungenmuskulatur ebenso möglich ist, wie eine einwandfreie, nachkontrollierbare Festlegung der Zentralposition (Bißlage-Fixierung). Ferner soll im Bedarfsfall eine einmal festgelegte Bißlage auch einfach korrigierbar sein.

Gemäß der Erfindung wird diese Aufgabe dadurch gelöst, daß sowohl der Abdrucklöffel für den Unterkiefer, als auch derjenige für den Oberkiefer an der oralen Seite mit einem zahnreihenimitierenden Wall versehen ist, und daß als Distanzierungseinrichtung auf dem Wall der Abdrucklöffel für den Unterkiefer mindestens drei lokale Distanzhalter vorgesehen sind, von denen einer am Scheitelpunkt und die anderen an den beiden seitlichen Teilen des bogenförmigen, zahnreihenimitierenden Walls angeordnet sind und daß auf jedem Distanzhalter eine begrenzte Menge der Abdruckmusse als Biß-Registrat vorgesehen ist.

Diese zahnreihenimitierenden Wälle, deren Höhe sich an Mittelwerten orientiert (gemessen von der Umschlagsfalte zur Schneidkante der Zähne) bringen zahlreiche Vorteile. So begrenzen sie bei der Abdrucknahme das Muskelspiel ungefähr auf das durch die spätere Prothese bestimmte Maß, wobei sie für die Abdruckmasse einen Halt bzw. ein Widerlager bei der Abformung der benachbarten Muskulatur (Wangen-, Lippen- und Zungenmuskulatur) bilden. Eine präzisere präfunktionelle Abformung der Kiefer wird dadurch möglich. Die drei lokalen Distanzhalter auf dem Wall des Abdrucklöffels für den Unterkiefer dienen als Träger für drei begrenzte Mengen einer Abdruckmasse (Biß-Registrat), die hier vorzugsweise aus einem speziellen, weichen, schnell aushärtenden Kunststoff besteht. Während das frontale Biß-Registrat auf die Papilla incisiva ausgerichtet ist, finden die seitlichen Biß-Registrate ihre Abstützung auf den antagonistischen Kieferkämmen. Durch diese Dreipunktabstützung des Abdrucklöffels während der Bißlagenfixierung, die nach dem Abbinden der Kunststoffmasse unverformbar fest ist, wird der Abdrucklöffel für den Unterkiefer eindeutig und sicher gegen den Oberkiefer fixiert, was eine einwandfreie Bißregistrierung bedeutet. Die als Biß-Registrat verwendeten drei Portionen relativ weichen Kunststoffes setzen der Mund-Schließbewegung des Patienten keinen störenden Widerstand entgegen und führen daher nicht, wie beim Stand der Technik mit der großflächigen Abformung auf einer Gaumenplatte zu muskulären Irritationen. Ferner wird im Gegensatz zu den eingangs erläuterten bekannten Methoden der Zungenraum nicht eingeengt und der Patient kann entsprechende Muskelbewegungen ausführen. Schließlich kann der behandelnde Arzt die festgelegte Zentralposition (Biß-Registrierung) nachkontrollieren und, falls erforderlich, einfach korrigieren.

Ferner ist es möglich, die erfindungsgemäßen Abdrucklöffel auch dann einzusetzen, wenn nur ein Kiefer unbezahnt ist. Die provisorische Bißnahme erfolgt in diesem Fall gleichfalls an drei Punkten, jedoch ohne die drei lokalen Distanzhalter, unmittelbar auf den Wällen bzw. mittels der auf diesen Wällen aufgebrachten weichen, schnell aushärtenden Kunststoffportionen. Sollte einer der Wälle zu einer Bißerhöhung führen, kann er vor der Abdrucknahme einfach auf das notwendige Maß abgeschliffen werden.

Schließlich kann vorteilhaft an dem Wall des Abdrucklöffels für den Oberkiefer nach der Erstabdrucknahme ein Montagestab für einen sogenannten Transferbogen befestigt werden, wodurch schon in dieser Behandlungsphase die Schädelbezüglichkeit festgehalten werden kann.

Gemäß einer Ausgestaltung der Erfindung folgen die zahnreihenimitierenden Wälle an ihrer oralen Seite der Kompensationskurve eines natürlichen Gebisses. Mit anderen Worten, sie folgen den Kieferkammlinien und sind entsprechend den Neigungsmerkmalen natürlicher Zähne im Oberkiefer nach buccal und im Unterkiefer nach lingual geneigt. Dadurch werden die oben erläuterten Funktionen dieser Wälle weiter verbessert.

Die Dreipunktabstützung des Abdrucklöffels für den Unterkiefer wird bei der Biß-Registrierung weiter verbessert, wenn nach noch einer weiteren Ausgestaltung der Erfindung je ein Distanzhalter im Kauzentrum der seitlichen Teile der zahnreihenimitierenden Wälle angeordnet ist.

Die Biß-Registriermasse (vorzugsweise weicher, schnell aushärtender Kunststoff) findet an den drei lokalen Distanzhaltern einen besonders guten Halt, wenn diese jeweils einen Stiel mit aufgesetztem Fixierteller aufweisen. Diese Fixierteller unterstützen vorteilhaft die Abstützfunktion der Distanzhalter. Letztere wird noch weiter verbessert, wenn entsprechend Anspruch 5 die Distanzhalter den Kieferkämmen folgende und entsprechend schiefwinklig zu ihren Stielen angeordnete Fixierteller enthalten.

Gemäß noch einer anderen Ausgestaltung der Erfindung bestehen die Distanzhalter aus Kunststoff und sind lösbar in unrunden Öffnungen im Wall des Abdrucklöffels für den Unterkiefer passend eingesteckt. Dieser Kunststoff lässt sich leicht abtrennen, so daß die Distanzhalter, je nach Bißhöhe, einfach auf das erforderliche Maß reduziert werden können. Je nach dem Größenverhältnis und der Bißlage der Kiefer zueinander können aufgrund der lösbaren Anordnung in unrunden Öffnungen die Distanzhalter mit ihren Fixiertellern entweder nach lingual oder nach buccal bzw. nach lingual oder frontal geneigt eingesteckt werden. So kann man mit relativ wenigen unterschiedlichen Distanzhaltern die unterschiedlichsten Vertikaldimensionen bei der Bißregistrierung festlegen.

Zweckmäßig weisen die Stiele der Distanzhalter und die Öffnungen im Wall des Abdrucklöffels für den Unterkiefer einen polygonen Querschnitt auf.

Die Erfindung wird anschließend anhand der Zeichnungen eines Ausführungsbeispiels erläutert. Es zeigen :

Figur 1   eine Schrägansicht eines erfindungsgemäßen Abdrucklöffels für den Unterkiefer mit einem zahnreihenimitierenden Wall von oben, wobei drei Distanzhalter in Positionen oberhalb ihrer Aufnahmeöffnungen in dem Wall angedeutet sind ;

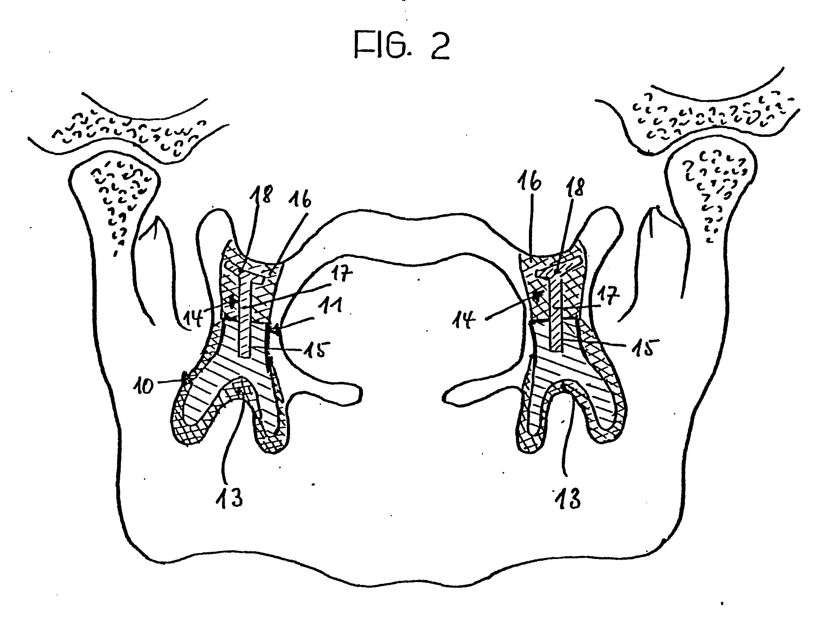

Figur 2   eine Schnittansicht des Abdrucklöffels entlang der Linie II-II in Figur 1 in Funktion bei der Biß-Registrierung, wobei die Abdruck- bzw. Registriermasse schraffiert gezeigt ist ;

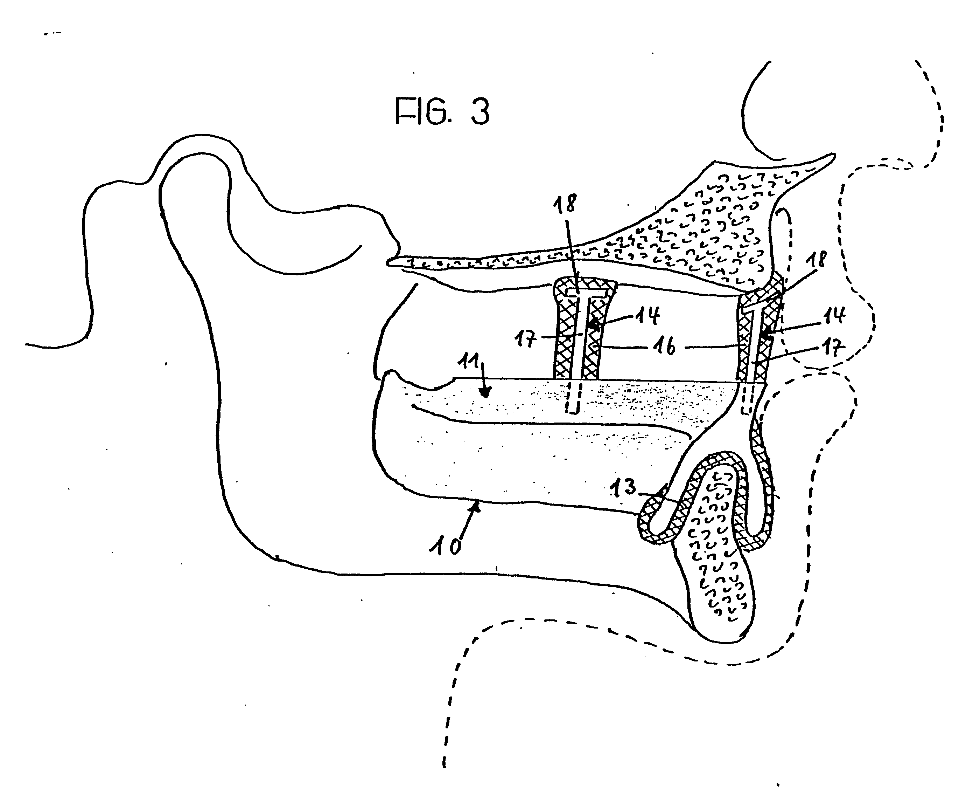

Figur 3   eine Seitenansicht des Abdrucklöffels der Figur 1 in Funktion bei der Biß-Registrierung ;

Figur 4   eine Schrägansicht des erfindungsgemäßen Abdrucklöffels für den Oberkiefer von unten ;

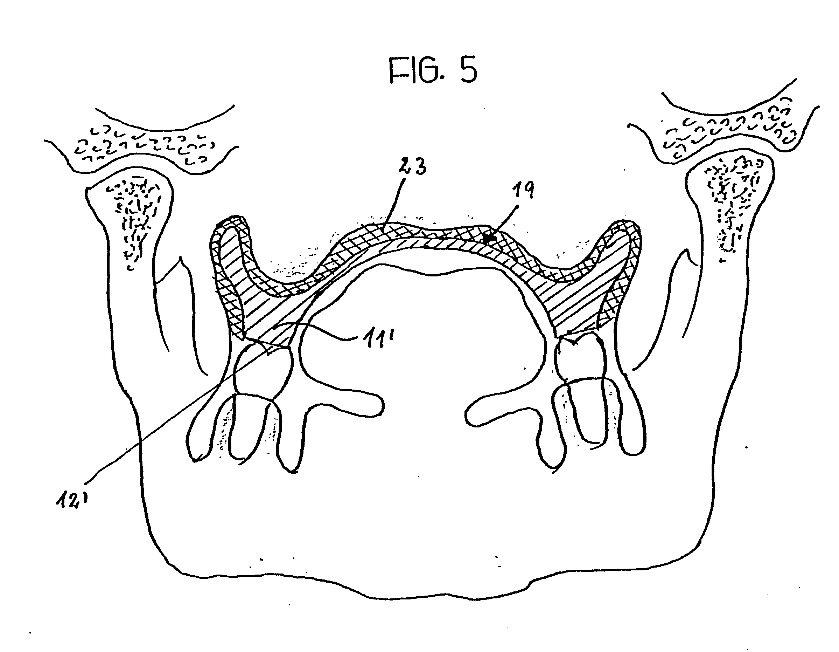

Figur 5   eine Schnittansicht des Abdrucklöffels für den Oberkiefer entlang der Linie V-V in Figur 4, jedoch in Funktion bei der Abformung des Oberkiefers, mit schraffiert angedeuteter Abformmasse und

Figur 6 eine Seitenansicht des Abdrucklöffels der Figur 4 in Funktion bei der Abformung des Oberkiefers, mit einem am Scheitelpunkt von dessen Wall befestigten Haltestiel.

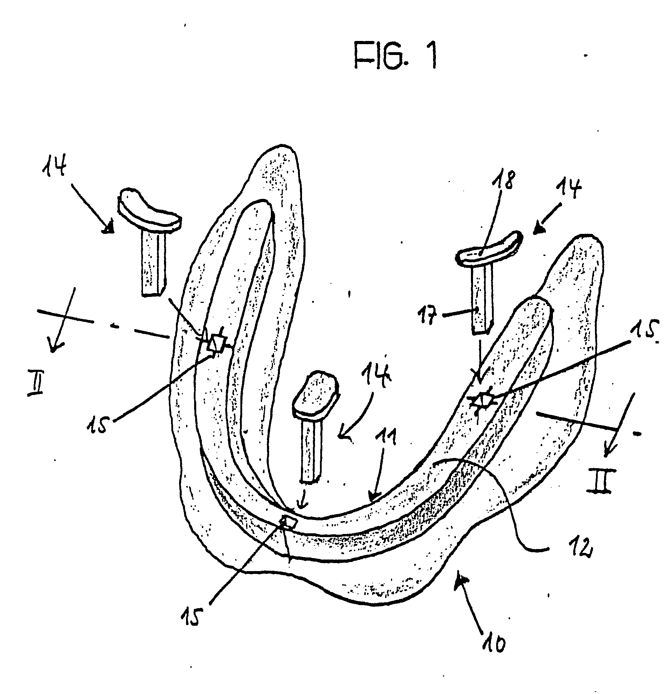

Der in Figur 1 gezeigte Abdrucklöffel 10 für den Unterkiefer eines Patienten besteht aus Kunststoff und weist an seiner oralen Seite einen angeformten, vorzugsweise aus dem gleichen Kunststoff wie der Abdrucklöffel 10 bestehenden, zahnreihenimitierenden Wall 11 auf. An Stelle eines angeformten Walles könnte zwischen Wall 11 und Abdrucklöffel 10 auch eine Steck-, Schraub- oder Klebeverbindung vorgesehen sein. Der angeformte Wall 11 wird jedoch bevorzugt. Dieser zahnreihenimitierende Wall 11 folgt an seiner oralen oder oberen Seite 12 der Kompensationskurve eines natürlichen Gebisses.

Um nach erfolgter Abformung des Unterkiefers mittels einer auf dem Abdrucklöffel 10 aufgebrachten, plastischen, aushärtenden Abdruckmasse 13 in einem weiteren Arbeitsschritt die Biß-Registrierung mit Hilfe einer sogenannten Dreipunktabstützung vornehmen zu können, sind drei Distanzhalter 14 vorgesehen, welche passend in Öffnungen 15 im Wall 11 eingesteckt werden können. Diese Distanzhalter 14 dienen als Träger bzw. Halterung für relativ geringe Mengen einer Abdruck- bzw. Registriermasse 16, die vorzugsweise aus einem sehr weichen, jedoch schnell erhärtenden Kunststoff besteht.

Die Distanzhalter 14 bestehen jeweils aus einem Stiel 17 mit z. B. quadratischem Querschnitt, an dessen oberen Ende schiefwinklig zum Stiel ein Fixierteller 18 vorgesehen ist. Die Distanzhalter 14 sind aus Kunststoff hergestellt und können daher im Bedarfsfall an ihrem Stiel 17 einfach gekürzt werden. Die Öffnungen 15 im Wall 11 weisen zur passenden Aufnahme der Stiele 17 einen entsprechenden quadratischen Querschnitt auf. Eine der Öffnungen 15 befindet sich am Scheitelpunkt des zahnreihenimitierenden Walls 11, während die anderen beiden Öffnungen 15 an den seitlichen Teilen des Walls 11 im Bereich der Kauzentren angeordnet sind.

Wenn nur der Unterkiefer unbezahnt ist, werden die Distanzhalter 14 weggelassen und drei Portionen der Abdruckmasse 16 werden gegenüber den Öffnungen 15 unmittelbar auf dem Wall 11 aufgebracht.

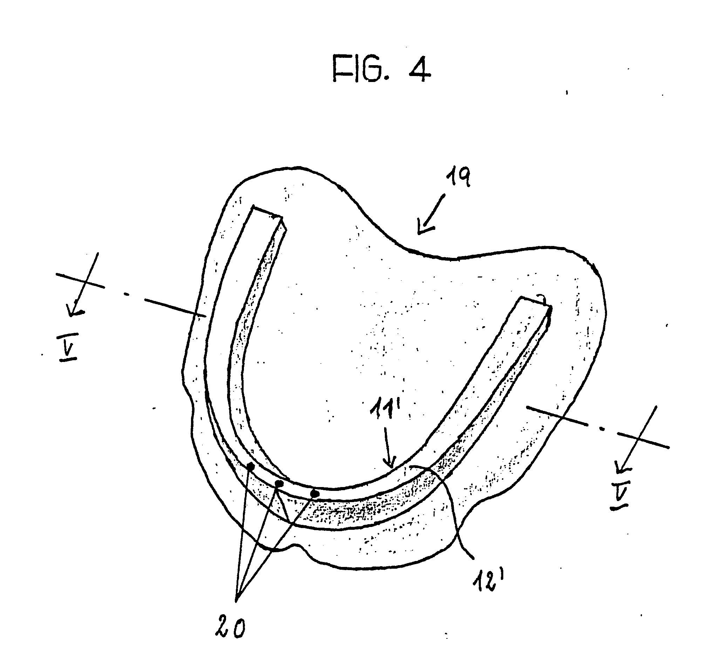

In Figur 4 ist der gleichfalls aus Kunststoff hergestellte Abdrucklöffel 19 für den Oberkiefer eines Patienten von unten gezeigt. Dieser Abdrucklöffel 19 weist ebenfalls an seiner oralen Seite einen angeformten, zahnreihenimitierenden Wall 11′ auf, der aus dem gleichen Kunststoff wie der Abdrucklöffel 19 bestehen kann. Auch in diesem Fall könnte jedoch die Befestigung des Walls 11′ am Abdrucklöffel 19 alternativ durch eine Steck-, Schraub- oder Klebeverbindung erfolgen. Der zahnreihenimitierende Wall 11′ folgt an seiner oralen oder unteren Seite 12′ ebenfalls der Kompensationskurve eines natürlichen Gebisses.

Im Bereich des Scheitelpunktes des Walls 11′

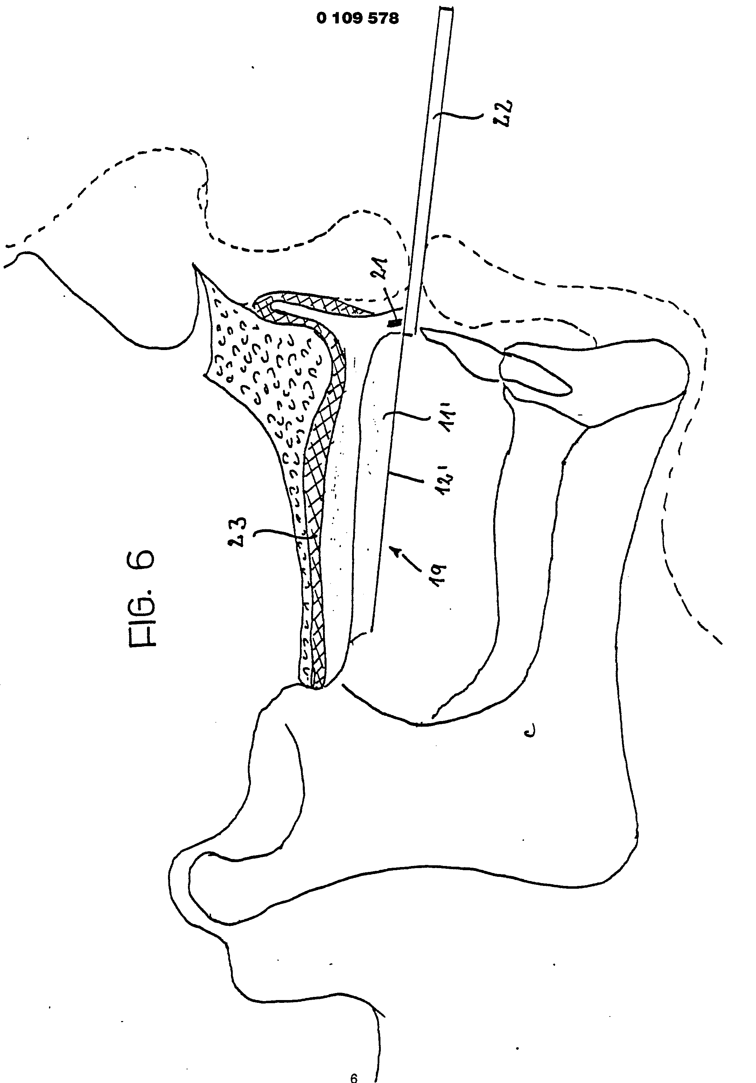

sind beispielhaft drei Öffnungen 20 vorgesehen, in welche drei Befestigungsstifte 21 (Figur 6) für einen Haltestiel 22 passend eingesteckt werden können. Mit 23 ist die auf dem Abdrucklöffel 19 aufgebrachte Abdruckmasse für den Oberkiefer und Gaumen bezeichnet.

## Patentansprüche

1. Abdrucklöffel zur Erstabformung von unbezahnten Kiefern unter Verwendung plastischer, aushärtender Abdruckmassen (13), wobei an dem Abdrucklöffel (10) für den Unterkiefer eine Distanzierungseinrichtung (14) mit einer Abdruckmasse als Biß-Registrat vorgesehen ist, dadurch gekennzeichnet, daß sowohl der Abdrucklöffel (10) für den Unterkiefer, als auch derjenige (19) für den Oberkiefer an der oralen Seite mit einem zahnreihenimitierenden Wall (11) versehen ist, und daß als Distanzierungseinrichtung auf dem Wall (11) der Abdrucklöffel (10) für den Unterkiefer mindestens drei lokale Distanzhalter (14) vorgesehen sind, von denen einer am Scheitelpunkt und die anderen an den beiden seitlichen Teilen des bogenförmigen, zahnreihenimitierenden Walls (11) angeordnet sind und daß auf jedem Distanzhalter (14) eine begrenzte Menge der Abdruckmasse (16) als Biß-Registrat aufgebracht ist.

2. Abdrucklöffel nach Anspruch 1, dadurch gekennzeichnet, daß die zahnreihenimitierenden Wälle (11) an ihrer oralen Seite (12) der Kompensationskurve eines natürlichen Gebisses folgen.

3. Abdrucklöffel nach Anspruch 1, dadurch gekennzeichnet, daß je ein Distanzhalter (14) im Kauzentrum der seitlichen Teile des zahnreihenimitierenden Walls (11) angeordnet ist.

4. Abdrucklöffel nach Anspruch 1, dadurch gekennzeichnet, daß die Distanzhalter (14) jeweils einen Stiel (17) mit aufgesetztem Fixierteller (18) aufweisen.

5. Abdrucklöffel nach Anspruch 4, dadurch gekennzeichnet, daß die Distanzhalter (14) den Kieferkämmen folgende und entsprechend schiefwinklig zu ihren Stielen (17) angeordnete Fixierteller (18) enthalten.

6. Abdrucklöffel nach den Ansprüchen 1, 3-5, dadurch gekennzeichnet, daß die Distanzhalter (14) aus Kunststoff bestehen und lösbar in unrunden Öffnungen (15) im Wall (11) des Abdrucklöffels (10) für den Unterkiefer passend eingesteckt sind.

7. Abdrucklöffel nach Anspruch 6, dadurch gekennzeichnet, daß die Stiele (17) der Distanzhalter (14) und die Öffnungen (15) im Wall (11) des Abdrucklöffels (10) für den Unterkiefer einen polygonen Querschnitt aufweisen.

## Claims

1. An impression tray for making the first casting of untoothed jaws using plastic curable impression materials (13), wherein provided on the impression tray (10) for the lower jaw is a spacer means (14) with an impression material as a bite register means characterised in that both the impression tray (10) for the lower jaw and also the impression tray (19) for the upper jaw is provided at the oral side with a wall (11) imitating a row of teeth, and that at least three local spacers (14) are provided as the spacer means on the wall (11) of the impression tray (10) for the lower jaw, one of the local spacers (14) being arranged at the apex of the arcuate wall (11) which imitates a row of teeth, while the other spacers are arranged at the two lateral parts of the arcuate wall (11), and that disposed on each spacer (14) is a limited amount of the impression material (16) as a bite register means.

2. An impression tray according to claim 1 characterised in that the walls (11) which imitate a row of teeth follow the compensation curve of a natural set of teeth, on their oral side (12).

3. An impression tray according to claim 1 characterised in that a respective spacer (14) is arranged at the mastication centre of the lateral parts of the wall (11) which imitates a row of teeth.

4. An impression tray according to claim 1 characterised in that the spacers (14) each have a respective post (17) with fixer plate (11) fitted thereon.

5. An impression tray according to claim 4 characterised in that the spacers (14) include fixer plates (18) which follow the jaw crests and which are arranged in a correspondingly tilted position relative to their posts (17).

6. An impression tray according to claims 1 and 3 to 5 characterised in that the spacers (14) consist of plastics material and are a releasable close fit in non-round openings (15) in the wall (11) of the impression tray (10).

7. An impression tray according to claim 6 characterised in that the posts (17) of the spacers (14) and the openings (15) in the wall (11) of the impression tray (10) for the lower jaw are of a polygonal cross-section.

## Revendications

1. Porte-empreintes pour premier moulage de mâchoires édentées, obtenu en utilisant des compositions ou masses (13) plastiques et durcissables pour moulage, un dispositif (14) de maintien de distance, comportant une composition à mouler, pour l'enregistrement d'une occlusion, étant prévu sur le porte-empreintes (10) pour la mâchoire inférieure, porte-empreintes caractérisé en ce qu'aussi bien le porte-empreintes (10) pour la mâchoire inférieure que celui (19) pour la mâchoire supérieure est muni du côté buccal d'un bourrelet (11) imitant une rangée de dents, et en ce qu'on prévoit, comme dispositif de maintien de distance sur le bourrelet (11) du porte-empreintes (10) pour la mâchoire inférieure au moins trois éléments (14) de maintien de distance locale dont l'un est disposé sur le point de crête la plus avancée vers l'extérieur ou l'avant et les autres sur les deux parties latérales du bourrelet (11) incurvé imitant une rangée de dents, et en ce qu'une quantité limitée de composition (16) pour moulage est appliquée, comme produit pour l'enregistrement d'une occlusion, sur chaque élément (14) de maintien de distance.

2. Porte-empreintes selon la revendication 1, caractérisé en ce que les bourrelets (11) imitant des rangées de dents suivent, sur leur côté (12) buccal, la courbe de compensation d'une occlusion naturelle.

3. Porte-empreintes selon la revendication 1, caractérisé en ce que chaque élément (14) de maintien de distance est placé au centre de mastication des parties latérales du bourrelet (11) imitant une rangée de dents.

4. Porte-empreintes selon la revendication 1, caractérisé en ce que les éléments (14) de maintien de distance présentent chacun une tige (17) surmontée d'un plateau (18) de fixation.

5. Porte-empreintes selon la revendication 4, caractérisé en ce que les éléments (14) de maintien de distance contiennent des plateaux (18) de fixation disposés en suivant les crêtes des mâchoires et en étant inclinés de façon correspondante sur leurs tiges (17).

6. Porte-empreintes selon les revendications 1, 3 à 5, caractérisé en ce que les éléments (14) de maintien de distance sont en matière plastique et sont insérés de manière convenable, en étant amovibles, dans des trous (15) non circulaires du bourrelet (11) du porte-empreintes (10) pour la mâchoire inférieure.

7. Porte-empreintes selon la revendication 6, caractérisé en ce que les tiges (17) des éléments (14) de maintien de distance et les trous (15) du bourrelet (11) du porte-empreintes (10) pour la mâchoire inférieure présentent une section polygonale.

# FIG. 1

FIG. 2

0 109 578

FIG. 3

18

18

14

17

16

14

17

11

13

10

0 109 578

FIG. 4

FIG. 5

FIG. 6